# EUROPÄISCHE PATENTSCHRIFT

(11) **EP 2 159 297 B1**
(45) Veröffentlichungstag und Bekanntmachung des Hinweises auf die Patenterteilung: **24.11.2010**
(21) Anmeldenummer: 08015384.4
(22) Anmeldetag: 01.09.2008
(51) Int. Cl.: C23C 2/00, F16C 13/02, F16C 19/26, F16C 23/08, F16C 33/60, F16C 33/62

(54) **Führungsrollen-Drehlagerung für ein Metallschmelzbad**
Roller bearing for a guide roll of hot-dipping bath
Palier à rouleaux pour rouleau de guidage de bain de métal en fusion

(43) Veröffentlichungstag der Anmeldung: 03.03.2010
(73) Patentinhaber: Band-Zink GmbH, 40764 Langenfeld (DE)
(72) Erfinder: Kouscheschi, Alireza, 50859 Köln (DE); Lieutenant, Roman, 47877 Willich (DE); Plätzer, Wilfried, 47809 Krefeld (DE); Plätzer, Daniel, 41751 Viersen (DE)
(74) Vertreter: Ter Smitten, Hans

(56) Entgegenhaltungen:
- EP-A- 0 610 167
- WO-A-2008/099819
- JP-A- 1 159 359
- JP-A- 2 153 055
- JP-A- 10 159 844
- US-A- 5 718 519
- US-A1- 2003 111 777

## Beschreibung

Die Erfindung betrifft eine Führungsrollen-Drehlagerung für ein Metallschmelzbad, mit einer in der Metallschmelze mittels Wellenenden in Wälzlagervorrichtungen drehbar gelagerten Welle, wobei die Wellenenden in beide Axialrichtungen verschiebbar in dem Wälzlagervorrichtungen gelagert sind, wobei die Wälzlagervorrichtungen an Schwenkarmen angeordnet sind und einen am Schenkarm fixierten Außenring, Zylinderrolle als Wälzkörper und einen Innenring aufweisen, wobei die Zylinderrollen durch Bordorgane am Innenring in beiden Axialrichtungen fixiert sind.

Derartige Führungsrollen-Drehlagerungen werden in Beschichtungsanlagen zum Beschichten eines Metallbandes in einer Schmelze eines Beschichtungsmetalles verwendet. Dabei werden die Beschichtungsvorrichtungen zum Beschichten von Metallbändern mit einer korrosionsbeständigen Schicht aus Zink, Zinn, Blei, Aluminium, Galvalume oder Galfan eingesetzt. Das Metallband wird dazu durch eine mehrere 100°C heiße Metallschmelze des betreffenden Beschichtungsmetalles hindurch gezogen. Zur Stabilisierung und zur Umlenkung sind in der Metallschmelze als Führungsrollen rotierende Wellen angeordnet. Die Lagerung der rotierenden Umlenkwelle im Metallschmelzbad erfolgt dabei in als Verschleißlager ausgelegten Lagervorrichtungen. Dabei ist es aus der DE 102 36 113 B3 bekannt, eine derartige Lagervorrichtung als Gleitlagervorrichtung auszubilden. Diese Gleitlagervorrichtung weist einen relativ hohen Verschleiß- und Materialabtrag auf, was einen häufigen Austausch von Lagerteilen verursacht, der mit hohen Kosten verbunden ist.

Die JP 01 159359 A beschreibt eine Führungsrollen-Drehlagerung mit einer Wälzlagervorrichtung der oben genannten Art, deren Wälzlager jedoch nur sehr aufwändig auszutauschen sind.

Aufgabe der Erfindung ist es daher, eine Führungsrollen-Drehlagerung zur Verfügung zu stellen, die die o. g. Nachteile vermeidet.

Diese Aufgabe wird erfindungsgemäß mit den Merkmalen des Anspruches 1 gelöst.

Bei der erfindungsgemäßen Führungsrollen-Drehlagerung weisen die Wellenenden einen Schutzüberzug aus einem Material auf, das verschleißfester ist, als das Material des Wellenendes, das in beide Axialrichtungen verschiebbar in einer Wälzlagervorrichtung gelagert ist. Die Wälzlagervorrichtung weist dabei einen am Schwenkarm fixierten Außenring, Zylinderrollen als Wälzkörper und einen Innenring auf. Die Zylinderrollen sind durch Bordorgane am Innen- und Außenring in beiden Axialrichtungen fixiert.

Eine derartig ausgebildete Lagervorrichtung gewährleistet eine besonders hohe Laufruhe bei geringem Verschleiß. Die Entfernung von Verschleißteilen ist hierbei auf besonders einfache und damit kostengünstige Weise möglich.

Um einen Ausgleich einer Axialbewegung bei gleichzeitigem Winkelversatz der Wellenenden der Umlenkwelle gewährleisten zu können, ist die zum Schutzüberzug gerichtete Oberfläche des Innenrings im Längsschnitt konvex ausgeführt. Durch eine im Wesentlichen punktförmige Berührung und die Drehfähigkeit des Innenrings kann eine Wirkung ähnlich dem Gleiteffekt eines Gleitlagers erreicht werden, wobei natürlich auch die Vorteile eines Wälzlagers berücksichtigt sind.

Dadurch, dass der Innenring, die Zylinderrollen und/oder der Außenring aus einem keramischen Material bestehen, ergibt sich eine besonders hohe Verschleißfestigkeit der Führungsrollen-Drehlagerung.

Als besonders vorteilhaft hat es sich erwiesen, dass der Schutzüberzug eine Hartlegierung auf Kobalt-Chrom-Basis ist. Hierbei kann der Schutzüberzug eine Beschichtung sein, oder aber auch in vorteilhafterweise als eine drehfest angeordnete Buchse ausgeführt sein. Diese Buchse kann dann durch ein Klemmorgan auf dem Wellenende gehalten sein.

Als Axiallager kann in axialer Richtung, dem Wellenende gegenüberliegend eine aus keramischem Material bestehende Anlaufscheibe vorgesehen sein.

Auch hat es sich als vorteilhaft erwiesen, dass ein Bordorgan als loses Bordelement ausgebildet ist, wobei es als Sicherungsring am Außenring vorgesehen ist. Auf diese Weise wird ein Auswechseln von Verschleißteilen wesentlich vereinfacht.

Im Folgenden wird unter Bezugnahme auf die Zeichnungen ein Ausführungsbeispiel der Erfindung näher erläutert. Es zeigen:
Figur 1 eine Beschichtungsvorrichtung mit einer erfindungsgemäßen Führungsrollen-Drehlagerung in einem Metallschmelzbad in Seitenansicht, und
Figur 2 einen Längsschnitt der Lagervorrichtung aus Figur 1.

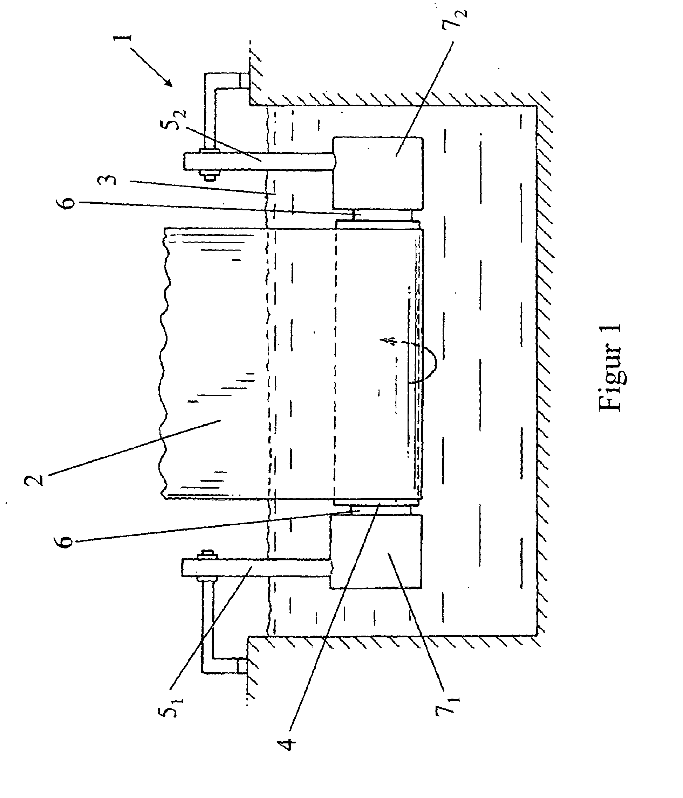

In Figur 1 ist in Seitenansicht eine Beschichtungsvorrichtung 1 zum Beschichten eines Metallbandes 2 in einem Metallschmelzbad 3 vereinfacht dargestellt. Das Metallband 2 wird durch das Metallschmelzbad 3 geleitet, um die Oberfläche des Metallbandes 2 mit einer dünnen Metallbeschichtung zu versehen.

Das Metallband 2 wird in das Metallschmelzbad 3 eingeführt und dort durch eine als drehbare Umlenkwelle 4 ausgebildete Führungsrolle senkrecht nach oben aus dem Metallschmelzbad 3 wieder heraus geführt. Die Zugkraft des Metallbandes 2 beträgt dabei zwischen 0,8 bis 6,5 t. Das Metallschmelzbad 3 besteht aus flüssigem Zink, Zinn, Blei, Aluminium, Galvalume, Galfan oder aus einem anderen zur Metallbeschichtung geeignetem Metall. Je nach Wahl des Schmelzmetalles hat das Metallschmelzbad 2 eine Temperatur von 400 °C bis 700 °C. Dabei erfolgt der Beschichtungsprozess bei Bandgeschwindigkeiten bis 250 m/min.

Die Umlenkwelle 6 wird durch zwei Schwenkarme 5₁, 5₂ in dem Metallschmelzbad 3 gehalten. Die Umlenkwelle 6 ist zu Wartungs- und Reparaturzwecken aus dem Metallschmelzbad 3 heraushebbar.

An beiden eingetauchten Enden der Schwenkarme 5₁, 5₂ ist jeweils eine Wälzlagervorrichtung 7₁, 7₂ vorgesehen, in denen die jeweiligen Wellenenden 6 der Umlenkwelle 4 drehbar gelagert sind.

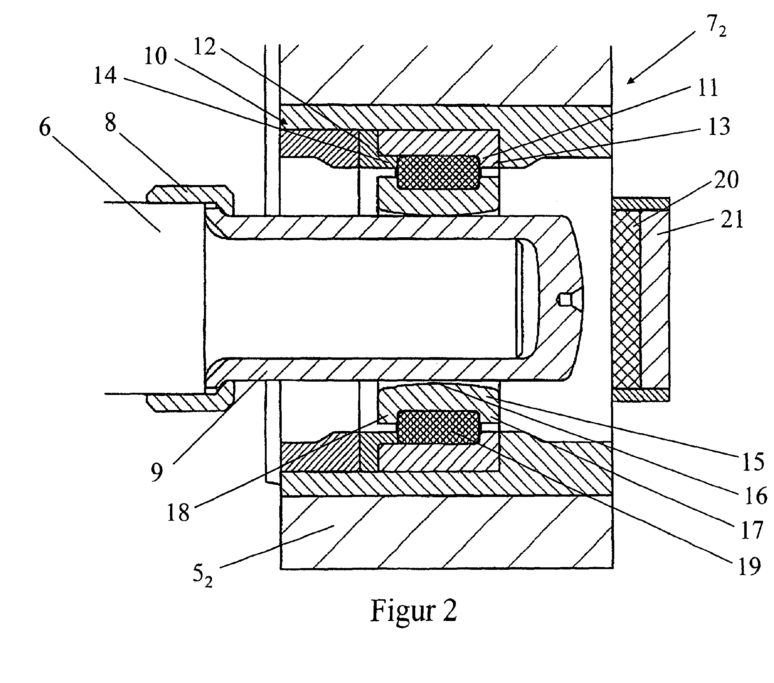

Der Aufbau der beiden Wälzlagervorrichtungen 7₁, 7₂ ist im Detail in der Figur 2 dargestellt. Am Wellenende 6 ist mittels eines Klemmorganes 8 eine Buchse 9 drehfest arretiert. Diese Buchse 9 dient im vorliegenden Fall als Schutzüberzug für das Wellenende 6, um diese auf Grund des Zusammenwirkens mit der Wälzlagervorrichtung 7₂ vor abrasivem Verschleiß zu schützen. Hierzu besteht die Buchse 9 im vorliegenden Ausführungsbeispiel aus einer Hartlegierung auf Kobalt-Chrom-Basis.

Das derartig mit der Buchse 9 versehene Wellenende 6 ist in beide Axialrichtungen verschiebbar in der Wälzlagervorrichtung 7₂ gelagert. Hierzu ist im Schwenkarm 5₂ eine zweiteilige Schwenkarmbuchse 10 vorgesehen, in dem ein Außenring 11 und der dazugehörige Sicherungsring 12 mittels Presspassung fixiert sind. Der Außenring 11 weist ein erstes Bordorgan 13 auf und der Sicherungsring 12 bildet das zweite Bordorgan 14 als loses Bordelement. Des Weiteren weist die Wälzlagervorrichtung 7₂ einen Innenring 15 auf, der die Verschiebbarkeit des Wellenendes in beide Axialrichtungen ermöglicht. Um auch einen Winkelversatz des Wellenendes 6 zu ermöglichen, ist die zur Buchse 9 gerichtete Oberfläche 16 des Innenrings 15 in Längsrichtung konvex ausgeführt. Auf diese Weise kann eine punktförmige Berührung zwischen der Buchse 9 und dem Innenring 15 vorliegen. Auch weist der Innenring 15 an der zum Außenring 11 gerichteten Oberfläche zwei Bordorgane 17 und 18 auf. Zylinderrollen 19 sind dementsprechend durch die Bordorgane 13, 14, 17 und 18 in beide Axialrichtungen fest zwischen Innenring 15 und Außenring 11 angeordnet.

Im vorliegenden Ausführungsbeispiel sind alle Teile der Wälzlagervorrichtung 7₂, also Außenring 11, Sicherungsring 12, Innenring 15 und Zylinderrollen 19 aus keramischem Material hergestellt.

In axialer Richtung, dem Wellenende 6 gegenüberliegend ist eine aus keramischem Material hergestellte Anlaufscheibe 20 vorgesehen, die als Axiallager dient. Die Anlaufscheibe 20 ist über ein Befestigungsorgan 21 auf nicht dargestellte Weise mit dem Schwenkarm 5₂ verbunden.

Zum Austausch verschlissener Wälzlagerteile oder der Buchse 9 schwenken die Schwenkarme 5₁, 5₂ die Wälzlagervorrichtungen 7₁, 7₂ mit der Umlenkwelle 4 aus dem Metallschmelzbad 3. Nach dem Abkühlen der Wälzlagervorrichtungen 7₁, 7₂ kann die zweiteilige Schwenkarmbuchse 10 gelöst werden und die entsprechenden Teile ausgewechselt und ersetzt werden.

## Patentansprüche

1. Führungsrollen-Drehlagerung für ein Metallschmelzbad (3), mit einer in der Metallschmelze mittels Wellenenden (6) in Wälzlagervorrichtungen (7₁, 7₂) drehbar gelagerten Welle (4), wobei die Wellenenden (6) in beide Axialrichtungen verschiebbar in dem Wälzlagervorrichtungen (7₁, 7₂) gelagert sind, wobei die Wälzlagervorrichtungen (7₁, 7₂) an Schwenkarmen (5₁, 5₂) angeordnet sind und einen am Schenkarm (5₁, 5₂) fixierten Außenring (11), Zylinderrolle (19) als Wälzkörper und einen Innenring (15) aufweisen, wobei die Zylinderrollen (19) durch Bordorgane (17, 18) am Innenring (15) in beiden Axialrichtungen fixiert sind, **dadurch gekennzeichnet, dass** die Wellenenden (6) einen Schutzüberzug (9) aus einem Material aufweisen, das verschleißfester ist, als das Material des Wellenendes (6) und der Außenring (11) Bordorgane (13, 14) aufweist, die zusammen mit den Bordorganen (17, 18) am Innenring (15) die Zylinderollen (19) in beiden Axialrichtungen fixieren.

2. Führungsrollen-Drehlagerung nach Anspruch 1, **dadurch gekennzeichnet, dass** die zum Schutzüberzug (9) gerichtete Oberfläche (16) des Innenrings (15) im Längsschnitt konvex ausgeführt ist.

3. Führungsrollen-Drehlagerung nach Anspruch 1 oder 2, **dadurch gekennzeichnet, dass** der Innenring (15), die Zylinderrollen (19) und/oder der Außenring (11) aus einem keramischen Material bestehen.

4. Führungsrollen-Drehlagerung nach einem der Ansprüche 1 - 3, **dadurch gekennzeichnet, dass** der Schutzüberzug (9) eine Hartlegierung auf Kobalt-Chrom-Basis ist.

5. Führungsrollen-Drehlagerung nach einem der Ansprüche 1 - 4, **dadurch gekennzeichnet, dass** der Schutzüberzug (9) eine Beschichtung ist.

6. Führungsrollen-Drehlagerung nach einem der Ansprüche 1 - 4, **dadurch gekennzeichnet, dass** der Schutzüberzug (9) eine drehfest angeordnete Buchse ist.

7. Führungsrollen-Drehlagerung nach Anspruch 6, **dadurch gekennzeichnet, dass** die Buchse (9) durch ein Klemmorgan (8) auf dem Wellenende (6) gehalten ist.

8. Führungsrollen-Drehlagerung nach einem der vorhergehenden Ansprüche, **dadurch gekennzeichnet, dass** in axialer Richtung, dem Wellenende (6) gegenüberliegend eine aus keramischem Material bestehende Anlaufscheibe (20) vorgesehen ist.

9. Führungsrollen-Drehlagerung nach einem der vorhergehenden Ansprüche, **dadurch gekennzeichnet, dass** ein Bordorgan (14) als loses Bordelement ausgebildet ist, wobei es als Sicherungsring (12) am Außenring (11) vorgesehen ist.

10. Führungsrollen-Drehlagerung nach einem der vorhergehenden Ansprüche, **dadurch gekennzeichnet, dass** ein derartiger Abstand zwischen Innenring (15) und Schutzüberzug (9) vorgesehen ist, dass die Verschiebbarkeit des Wellenendes in beide Axialrichtungen gewährleistet ist.

## Claims

1. Roller bearing for a guide roll for a molten metal bath (3), comprising a shaft (4) that is rotatably supported in the molten metal by shaft ends (6) in roller bearing devices (7₁, 7₂), wherein the shaft ends (6) are supported in the roller bearing devices (7₁, 7₂) for displacement in both axial directions, wherein the roller bearing devices (7₁, 7₂) are arranged on pivot arms (5₁, 5₂) and comprise an outer ring (11) fixed to the pivot arm (5₁, 5₂), cylindrical rolls (19) as rolling elements, and an inner ring (15), wherein the cylindrical rollers (19) are fixed in both axial directions by means of flange members (17, 18) of the inner ring (15), **characterized in that** the shaft ends (6) comprise a protective covering (9) of a material that is more wear-resistant than the material of the shaft end (6), and the outer ring (11) comprises flange members (13, 14) which, together with the flange members (17, 18) at the inner ring (15) fix the cylindrical rolls (19) in both axial directions.

2. Roller bearing for a guide roll according to claim 1, **characterized in that** the surface (16) of the inner ring (15) directed towards the protective covering (9) is convex in longitudinal section.

3. Roller bearing for a guide roll according to claim 1 or 2, **characterized in that** the inner ring (15), the cylindrical rolls (19) and/or the outer ring (11) are made of ceramic material.

4. Roller bearing for a guide roll according to one of claims 1 - 3, **characterized in that** the protective covering (9) is a hard alloy on a cobalt-chromium basis.

5. Roller bearing for a guide roll according to one of claims 1 - 4, **characterized in that** the protective covering (9) is a coating.

6. Roller bearing for a guide roll according to one of claims 1 - 5, **characterized in that** the protective covering (9) is a rotationally fixed bushing.

7. Roller bearing for a guide roll according to claim 6, **characterized in that** the bushing (9) is held on the shaft end (6) by means of a clamping member (8).

8. Roller bearing for a guide roll according to one of the preceding claims, **characterized in that** a thrust washer (20) of ceramic material is provided in the axial direction opposite the shaft end (6).

9. Roller bearing for a guide roll according to one of the preceding claims, **characterized in that** a flange member (11) is formed as a loose flange element that is provided as a safety ring (12) at the outer ring (11).

10. Roller bearing for a guide roll according to one of the preceding claims, **characterized in that** the distance between the inner ring (15) and the protective covering (9) is such that the displaceability of the shaft end in both axial directions is guaranteed.

## Revendications

1. Palier à rouleaux pour rouleau de guidage de bain de métal en fusion (3), comprenant un arbre (4) supporté dans le métal en fusion par les extrémités de l'arbre (6) dans des dispositifs de palier à rouleaux (7₁, 7₂), lesdites extrémités de l'arbre (6) étant supportées dans les dispositifs de palier à rouleaux (7₁, 7₂) de sorte qu'elles sont déplaçable dans les deux directions axiales, lesdits dispositifs de palier à rouleaux (7₁, 7₂) étant prévus sur des bras pivotants (5₁, 5₂) et comportant une bague extérieure (11) fixée au bras pivotant (5₁, 5₂), des rouleaux cylindriques (19) faisant office des éléments roulants et une bague intérieure (15), lesdits rouleaux cylindriques (19) étant fixés dans les deux directions axiales par des organes de rebord (17, 18) de la bague intérieure (15), **caractérisé en ce que** lesdites extrémités (6) comprennent un recouvrement de protection (9) d'un matériau plus résistant à l'usure que le matériau de l'extrémité de l'arbre (6), et ladite bague extérieure (11) comprend des organes de rebord (13, 14) qui fixent, en coopération avec les organes de rebord (17, 18) de ladite bague intérieure (15)., les rouleaux cylindriques (19) dans les deux directions axiales.

2. Palier à rouleaux pour rouleau de guidage selon la revendication 1, **caractérisé en ce que** la surface (16) de ladite bague intérieure (15) tournée vers le recouvrement de protection (9) est en forme convexe en section longitudinale.

3. Palier à rouleaux pour rouleau de guidage selon la revendication 1 ou 2, **caractérisé en ce que** ladite bague intérieure (15), les rouleaux cylindriques (19) et/ou la bague extérieure (11) sont fait d'un matériau céramique.

4. Palier à rouleaux pour rouleau de guidage selon l'une quelconque des revendications 1 - 3, **caractérisé en ce que** le recouvrement de protection (9) est un alliage dur à base de cobalt et chrome.

5. Palier à rouleaux pour rouleau de guidage selon l'une quelconque des revendications 1 - 4, **caractérisé en ce que** le recouvrement de protection (9) est un revêtement.

6. Palier à rouleaux pour rouleau de guidage selon l'une quelconque des revendications 1 - 4, **caractérisé en ce que** le recouvrement de protection (9) est une douille liée en rotation.

7. Palier à rouleaux pour rouleau de guidage selon la revendication 6, **caractérisé en ce que** ladite douille (9) est retenue sur l'extrémité de l'arbre (6) par un organe de serrage (8).

8. Palier à rouleaux pour rouleau de guidage selon l'une quelconque des revendications précédentes, **caractérisé en ce que** dans la direction axiale, vis-à-vis de ladite extrémité de l'arbre (6), une bague de portée (20) en matériau céramique est prévue.

9. Palier à rouleaux pour rouleau de guidage selon l'une quelconque des revendications précédentes, **caractérisé en ce qu'**un organe de rebord (14) est configuré comme élément de rebord libre, qui est prévu comme bague de sécurité (12) à ladite bague extérieure (11).

10. Palier à rouleaux pour rouleau de guidage selon l'une quelconque des revendications précédentes, **caractérisé en ce que** la distance entre ladite bague intérieure (15) et ledit recouvrement de protection (9) est de sorte que la mobilité de ladite extrémité de l'arbre dans les deux directions axiales soit garantie.
